# FASCICULE DE BREVET EUROPEEN

(11) **EP 4 214 822 B1**
(45) Date de publication et mention de la délivrance du brevet: **02.12.2026**
(21) Numéro de dépôt: 21756015.0
(22) Date de dépôt: 23.07.2021
(51) Int. Cl.: H02K 11/20, H02K 1/27, H02K 7/08, H02K 21/14

(54) **ROTOR POUR MOTEUR ÉLECTRIQUE ÉQUIPÉ D'UN CIRCUIT ÉLECTRONIQUE**
ROTOR FÜR EINEN ELEKTROMOTOR MIT EINER ELEKTRONISCHEN SCHALTUNG
ROTOR FOR AN ELECTRIC MOTOR EQUIPPED WITH AN ELECTRONIC CIRCUIT

(30) Priorité: 17.09.2020 FR 2009415
(43) Date de publication de la demande: 26.07.2023
(73) Titulaire: NOVARES France, 78140 Vélizy-Villacoublay (FR)
(72) Inventeur: LEDIEU, Cédric, 62144 Mont-Saint-Éloi (FR)
(74) Mandataire: Germain Maureau
(86) Numéro de dépôt international: PCT/FR2021/051386
(87) Numéro de publication internationale: WO 2022/058667

(56) Documents cités:
- EP-B1- 2 795 765
- CN-A- 104 567 963
- CN-A- 105 515 285
- US-A1- 2017 363 484

## Description

La présente invention concerne un rotor pour moteur électrique. L'invention concerne aussi un moteur électrique comprenant un tel rotor.

De manière générale, les moteurs électriques actuels comportent un rotor solidaire d'un arbre et un stator qui entoure le rotor. Le stator est monté dans un carter qui comporte des roulements pour le montage en rotation de l'arbre. Le rotor comporte un corps formé par un empilage de tôles ou roues polaires (claw pole) maintenues sous forme de paquet au moyen d'un système de fixation adapté. Le corps du rotor comporte des cavités internes logeant des aimants permanents. Le stator comporte un corps constitué par un empilage de tôles formant une couronne, dont la face intérieure est pourvue de dents délimitant deux à deux une pluralité d'encoches ouvertes vers l'intérieur du corps de stator et destinées à recevoir des enroulements de phase. Ces enroulements de phase traversent les encoches du corps de stator et forment des chignons faisant saillie de part et d'autre du corps de stator. Les enroulements de phase peuvent par exemple être constitués d'une pluralité de segments de conducteur en forme de U, les extrémités libres de deux segments adjacents étant reliées entre elles par soudage.

Dans le rotor, le paquet de tôles est enserré axialement entre un flasque avant et un flasque arrière montés coaxialement à l'arbre. Chaque flasque a globalement la forme d'un disque s'étendant dans un plan radial perpendiculaire à l'axe de l'arbre. Chaque flasque comporte un orifice central pour le montage coaxial sur l'arbre et plusieurs trous traversant destinés à recevoir des boulons traversant axialement l'ensemble du paquet de tôles, les vis étant solidarisées aux flasques au moyen d'écrous. Les flasques avant et arrière sont généralement formés d'un matériau amagnétique, conducteur de chaleur, par exemple un métal.

Les moteurs électriques étant susceptibles d'être endommagés, voire d'être détruits, en cas de surchauffe du rotor, il est généralement nécessaire d'équiper les moteurs électriques de capteurs de température aptes à mesurer la température au sein du rotor. Actuellement, ces capteurs sont généralement fixés sur le stator. Cette position relativement éloignée de la source principale de chaleur n'est toutefois pas satisfaisante car elle ne fournit pas une mesure suffisamment fiable de la température régnant au sein du rotor. Cette solution est toutefois privilégiée, car l'implantation de capteurs de température au niveau du rotor n'est pas simple à réaliser, du fait de la mobilité du rotor. En effet, de tels capteurs nécessitent d'être connectés à une unité de commande pour assurer leur fonctionnement correct et permettre le traitement en aval des données mesurées par ces capteurs. Pour éviter les perturbations engendrées par le mouvement et le risque de dysfonctionnement, l'unité de commande ne peut pas être disposée sur le rotor. Il est donc nécessaire de positionner l'unité de commande au niveau du stator. Ce positionnement de l'unité de commande au niveau du stator pose toutefois plusieurs problèmes. D'une part, il ne permet pas une connexion simple, par exemple par voie filaire, entre les capteurs et l'unité de commande. D'autre part, l'éloignement relativement important et variable entre les capteurs et l'unité de commande ne permet pas d'assurer une transmission fiable des informations entre eux, ce qui peut aboutir au final à une détection partielle, voire erronée de la température du rotor. Cette problématique n'est évidemment pas spécifique aux capteurs de température. Elle s'applique également pour l'implantation de tout type de capteurs au niveau du rotor d'un moteur électrique. Des rotors pour moteur électrique incorporant des capteurs sont décrits dans les documents CN 105 515 285 A, EP 2 795 765 B1 et US 2017/363484 A.

La présente invention a pour but de proposer une solution qui réponde aux problèmes précités.

A cet effet, la présente invention concerne un rotor pour moteur électrique tel que défini par la revendication 1 et comprenant :
- un arbre de rotor monté rotatif autour d'un axe;
- un paquet de tôles monté coaxialement sur l'arbre de rotor, ledit paquet de tôles comprenant une pluralité de cavités internes;
- une pluralité d'aimants permanents logés à l'intérieur des cavités internes du paquet de tôles;
- au moins un flasque monté axialement sur l'arbre de rotor,
- au moins un capteur fixé ou intégré audit au moins un flasque,
- un circuit électronique relié électriquement audit au moins un capteur, caractérisé par le fait que le circuit électronique est solidaire d'un support de l'électronique fixé sur une face externe dudit au moins un flasque, ledit support de l'électronique étant configuré pour loger au moins partiellement une extrémité de l'arbre de rotor.

Ainsi configuré, le rotor de l'invention permettra de positionner un circuit électronique dans un prolongement axial d'un des flasques du rotor, ledit circuit électronique étant ainsi correctement positionné pour faire face à un capteur électronique correspondant du stator. Ce positionnement permettra d'assurer une transmission fiable des données entre le circuit électronique et le capteur électronique.

Le rotor de l'invention pourra également comprendre une ou plusieurs des caractéristiques suivantes :
- le circuit électronique se présente sous la forme d'une bague de forme annulaire.
- le circuit électronique est relié audit au moins un capteur au moyen de bandes de connexion électrique.
- le circuit électronique et les bandes de connexion électrique sont réalisés en une seule pièce avec le support de l'électronique.

Selon l'invention,
- le support de l'électronique comprend une première partie d'extrémité jouxtant ledit au moins un flasque et une deuxième partie d'extrémité incorporant le circuit électronique, lesdites première et deuxième parties d'extrémité étant reliées par des barrettes de liaison s'étendant parallèlement à l'axe de l'arbre de rotor.

Selon d'autres modes de réalisation avantageux de l'invention,
- la deuxième partie d'extrémité est munie d'une ouverture centrale de forme cylindrique, ladite ouverture centrale possédant une forme complémentaire à une portion d'extrémité de l'arbre de rotor.
- la première partie d'extrémité du support de l'électronique possède une forme sensiblement annulaire et chacune des barrettes de liaison possède une première section droite orientée axialement et une deuxième section courbe reliant ladite première section droite à un bord intérieur de ladite première partie d'extrémité.
- le circuit électronique est configuré pour émettre des signaux au moyen d'une technologie de communication sans contact.
- la technologie de communication sans contact est choisie parmi l'induction et la NFC.
- ledit au moins un capteur est configuré pour mesurer une grandeur physique choisie parmi la température, l'humidité, la position et la vibration.
- ledit au moins un capteur est solidaire d'une tige s'étendant axialement depuis une face interne dudit au moins un flasque, ladite tige étant logée à l'intérieur d'un orifice ménagé axialement dans le paquet de tôles.

L'invention concerne également un moteur électrique comprenant un rotor tel que défini précédemment et un stator entourant le rotor.

Le moteur de l'invention pourra également comprendre une ou plusieurs des caractéristiques suivantes :
- il comprend un carter constitué d'un palier avant et d'un palier arrière connectés l'un à l'autre, par exemple au moyen de vis, au moins l'un des paliers avant et arrière logeant un capteur électronique destiné à recevoir des signaux émis par le circuit électronique du rotor.
- le capteur électronique est solidaire d'un support de capteur fixé sur une face externe d'un des paliers avant et arrière de manière à être aligné avec l'arbre du rotor, ledit support de capteur possédant une extrémité entourant le support de l'électronique, le capteur électronique étant disposé sur un bord interne de ladite extrémité de manière à faire face radialement au circuit électronique.
- le capteur électronique est relié par des connexions électroniques à une unité de commande du moteur électrique.

D'autres aspects, buts, avantages et caractéristiques de l'invention apparaîtront mieux à la lecture de la description détaillée suivante d'un mode de réalisation préféré de celle-ci, donnée à titre d'exemple non limitatif, et faite en référence aux dessins annexés sur lesquels:
[Fig. 1] est une vue en perspective d'un moteur électrique selon un mode de réalisation particulier de l'invention.
[Fig. 2] est une vue en coupe axiale du moteur électrique représenté sur la figure 1.
[Fig. 3] est une vue en perspective éclatée du moteur électrique représenté sur la figure 1.
[Fig. 4] est une vue en perspective partielle du rotor équipant le moteur électrique représenté sur la figure 1.
[Fig. 5] est une vue en perspective du support de l'électronique équipant le rotor représenté sur la figure 4.
[Fig. 6] est une vue en perspective de l'ensemble formé par le circuit électronique et les bandes de connexion électrique du support de l'électronique représenté sur la figure 5.
[Fig. 7] est une vue agrandie du moteur électrique représenté sur la figure 2, au niveau du support de l'électronique de la figure 5.

Sur les figures et dans la suite de la description, les mêmes références représentent les éléments identiques ou similaires. De plus, les différents éléments ne sont pas représentés à l'échelle de manière à privilégier la clarté des figures.

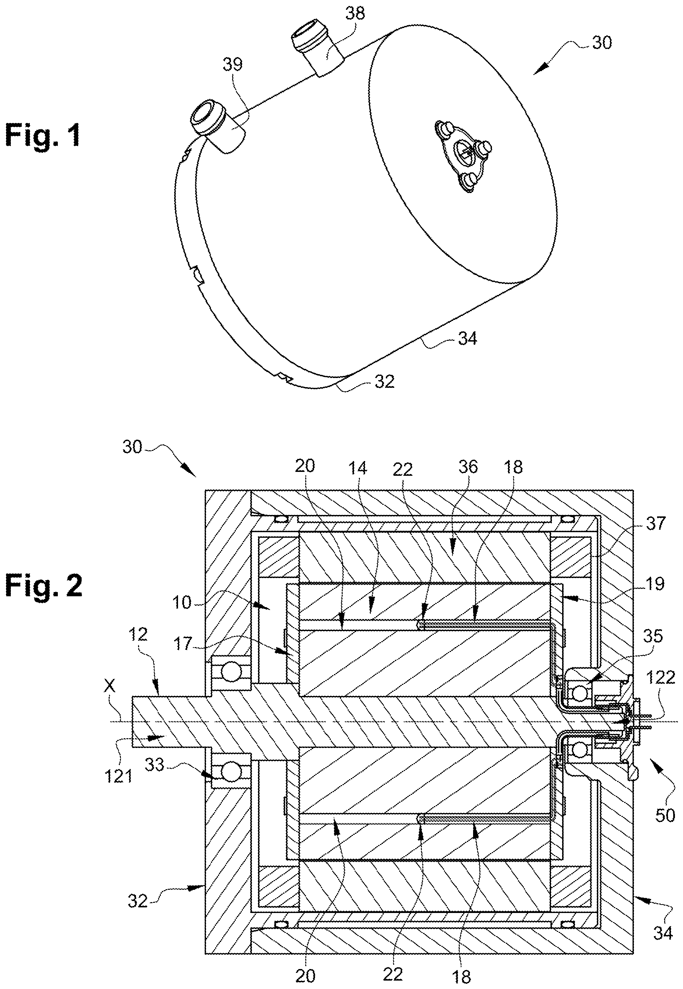

En référence aux figures 1 à 3, il est représenté un moteur électrique selon un mode de réalisation particulier de l'invention.

Ce moteur électrique 30 comprend notamment un carter en deux parties logeant un rotor 10 solidaire en rotation d'un arbre de rotor 12 et un stator 36 annulaire qui entoure le rotor 10 de manière coaxiale à l'arbre de rotor 12. Le carter est constitué notamment d'un palier avant 32 et d'un palier arrière 34 connectés l'un à l'autre au moyen de vis 31. Les paliers 32, 34 sont de forme creuse et portent chacun centralement un roulement à billes respectivement 33 et 35 pour le montage en rotation de l'arbre de rotor 12. L'arbre de rotor 12 est monté rotatif autour d'un axe X.

Comme illustré sur la figure 2, des chignons 37 font saillie axialement de part et d'autre du corps de stator 36 et sont logés dans l'espace intermédiaire séparant le stator 36 des paliers respectifs 32, 34.

Le rotor 10 comprend un corps formé par un paquet de tôles 14, par exemple, formé dans un matériau ferromagnétique, notamment en acier, le paquet de tôles 14 étant monté coaxialement sur l'arbre de rotor 12. Le paquet de tôles 14 est formé d'un empilement axial de tôles qui s'étendent dans un plan radial perpendiculaire à l'axe de l'arbre de rotor 12. L'arbre de rotor 12 peut par exemple être emmanché en force à l'intérieur d'une ouverture centrale du paquet de tôles 14 de manière à lier en rotation le corps du rotor 10 avec l'arbre de rotor 12.

Le paquet de tôles 14 comprend une pluralité de cavités internes à l'intérieur desquelles une pluralité d'aimants permanents 16 est logée.

Une pluralité d'orifices 20 traversants, ménagés axialement dans le paquet de tôles 14, permettent le passage de vis 24 et de tiges 18.

La tête des vis 24 est en appui contre la face externe d'un flasque avant 17 monté axialement sur une première extrémité 121 de l'arbre de rotor 12, tandis que l'extrémité filetée des vis 24 reçoit un écrou 25 qui est en appui contre la face externe d'un flasque arrière 19, monté axialement sur une deuxième extrémité 122 de l'arbre de rotor 12. Ainsi, le paquet de tôles 14 est enserré axialement entre le flasque avant 17 et le flasque arrière 19. Les flasques 17 et 19 possèdent chacun la forme d'un disque s'étendant dans un plan radial perpendiculaire à l'axe X de l'arbre de rotor 12. Les flasques 17, 19 comportent un orifice central pour le montage coaxial sur l'arbre 12 et plusieurs trous de fixation alignés avec les orifices 20 du paquet de tôles 14 et destinés à recevoir les vis 24 traversant axialement l'ensemble du paquet de tôles 14. Ces flasques 17, 19 permettent d'assurer un équilibrage du rotor 10 tout en permettant un bon maintien des aimants permanents 16 à l'intérieur de leur cavité interne. L'équilibrage peut être effectué par ajout ou retrait de matière de ces flasques 17,19. Le retrait de matière peut être effectué par usinage, tandis que l'ajout de matière peut être effectué en implantant des éléments dans des ouvertures prévues à cet effet et réparties suivant la circonférence du flasque 17, 19.

Chaque tige 18 possède une extrémité externe jouxtant la face interne d'un des flasques avant 17 ou arrière 19, et une extrémité interne dirigée vers le flasque opposée 17 ou 19. Dans la variante représentée, l'extrémité externe des tiges 18 jouxte la face interne du flasque arrière 19 et l'extrémité interne est dirigée vers le flasque avant 17. Un capteur 22 est par ailleurs fixé sur, ou intégré à l'extrémité interne des tiges 18. Les capteurs 22 pourront par exemple être surmoulés avec les tiges 18, ou être fixés sur les tiges 18 par collage ou clippage, ou encore être directement imprimés sur les tiges 18. Chaque tige 18 aura de préférence une longueur sensiblement égale à la moitié de la dimension du paquet de tôles 14, telle que mesurée dans le sens axial, de telle sorte que l'extrémité interne des tiges 18, et par conséquent les capteurs 22, seront avantageusement positionnés au milieu du paquet de tôles. Ce positionnement des capteurs 22 permettra ainsi d'effectuer des mesures de paramètres physiques au sein même du rotor 10. Ces mesures seront donc plus fiables et permettront, dans le cas où le capteur 22 est un capteur de température, de mesurer suffisamment tôt une surchauffe dudit rotor 10 et, de ce fait, de limiter le risque d'un endommagement possible du moteur électrique 30 résultant d'une telle surchauffe. Dans d'autres modes de réalisation de l'invention (non représentés), le capteur 22 pourra également ne pas être fixé à une tige 18. Il pourra par exemple être directement intégré dans l'un des flasques 17, 19. Le capteur 22 pourra également être configuré pour mesurer d'autres paramètres physiques que la température. En particulier, le capteur 22 pourra être un capteur d'humidité, de position ou de vibration.

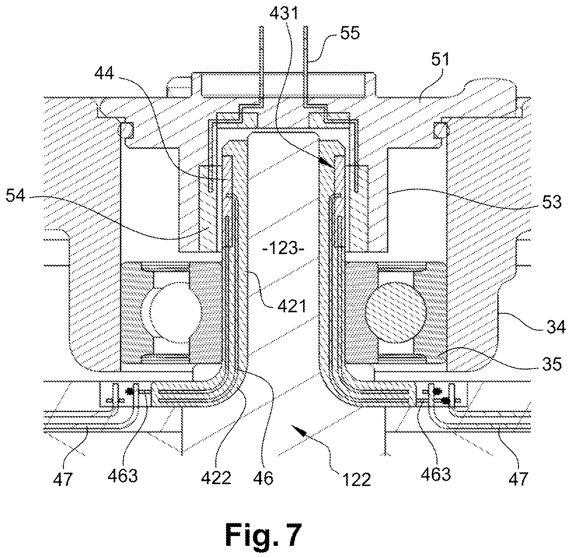

Comme représenté sur les figures 2 et 7, chaque capteur 22 est en connexion électrique avec un circuit électronique 44 solidaire d'un support de l'électronique 40 par l'intermédiaire de fils conducteurs 47 et de bandes de connexion électrique 46. Les fils conducteurs 47 sont partiellement noyés dans le corps des tiges 18 et du flasque 17 ou 19 qui jouxte l'extrémité externe desdites tiges 18. Comme décrit en détail par la suite, les bandes de connexion électrique 46 sont solidaires du support de l'électronique 40.

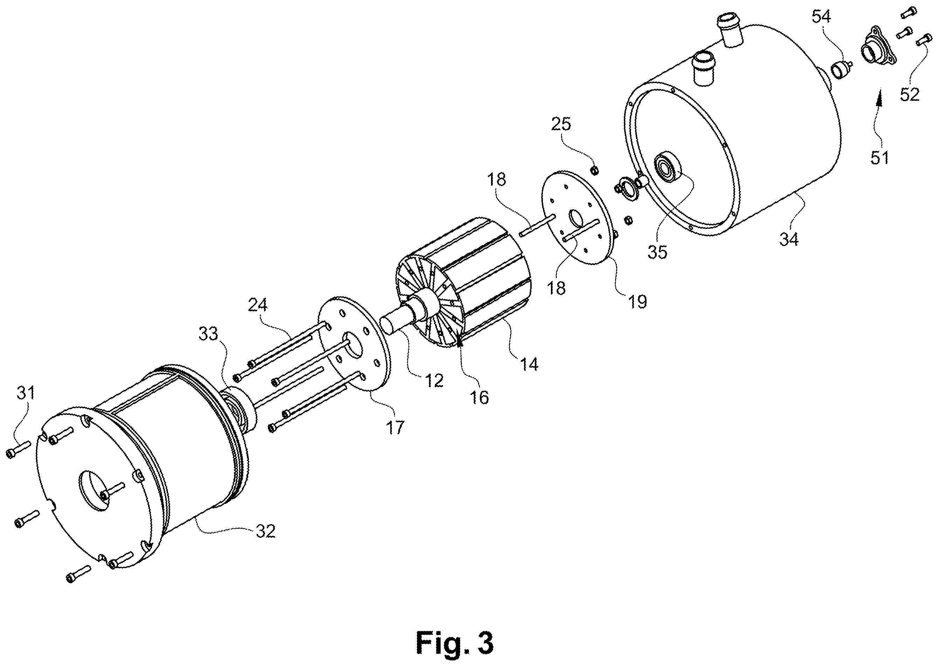

Le circuit électronique 44 est configuré pour communiquer avec un capteur électronique 54 (émetteur ou récepteur) solidaire d'un support de capteur électronique 50 par l'intermédiaire d'un mode de communication sans contact, comme l'induction ou la NFC. Le support de capteur électronique 50 est fixé sur la face externe du palier arrière 34 au moyen de vis 52 (voir figure 3). Il se présente sous la forme d'un socle 51 possédant une extrémité 53 de forme sensiblement cylindrique qui est orientée vers le palier avant 32. Cette extrémité 53 est disposée de manière coaxiale à la deuxième extrémité 122 de l'arbre de rotor 12. Le capteur électronique 54 est fixé sur le bord intérieur de l'extrémité 53 de telle sorte qu'il fait face au circuit électronique 44. Il est séparé de celle-ci par une faible distance, notamment une distance inférieure à quelques millimètres, dans le sens radial de telle sorte qu'une transmission des données du circuit électronique 44 vers le capteur électronique 54 peut s'opérer sans contact. Le capteur électronique 54 est par ailleurs relié par des connexions électroniques 55 à une unité de commande (non représentée) du moteur électrique. Ainsi, les données collectées par les capteurs 22 peuvent être transmises à ladite unité de commande via le capteur électronique 54, afin d'y être analysées. Cette analyse pourra notamment aboutir à une modification du fonctionnement du moteur électrique, en particulier dans le cas où les capteurs 22 mesureront une surchauffe du rotor 10. De manière avantageuse, les connexions électroniques 55 pourront être partiellement noyées dans le socle 51, comme l'illustre la figure 7.

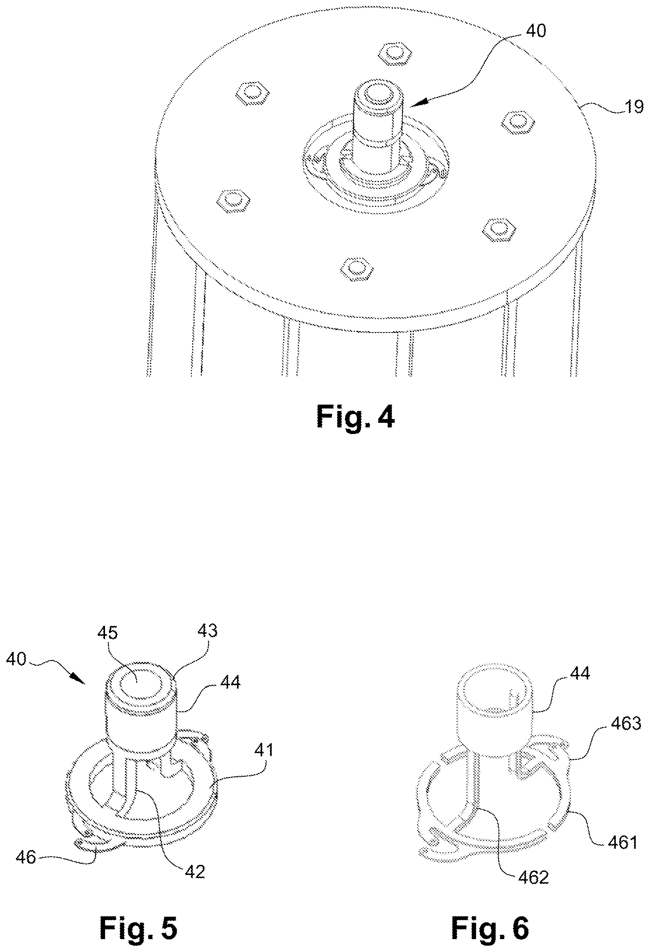

En référence aux figures 4 à 6, il est représenté le support de l'électronique 40. Ce support de l'électronique 40 est fixé sur la face externe du flasque arrière 19. Il est disposé de manière coaxiale à la deuxième extrémité 122 de l'arbre de rotor 12 et est configuré pour la loger au moins partiellement. Le support de l'électronique 40 comprend notamment une première partie d'extrémité 41 jouxtant le flasque arrière 19 et une deuxième partie d'extrémité 43 incorporant le circuit électronique 44, lesdites première et deuxième parties d'extrémité 41, 43 étant reliées par deux barrettes de liaison 42 s'étendant parallèlement à l'axe X de l'arbre de rotor 12. La deuxième partie d'extrémité 43 est munie d'une ouverture centrale 45 de forme cylindrique, ladite ouverture centrale 45 possédant une forme complémentaire à une portion d'extrémité 123 de l'arbre de rotor 12 (voir figure 7). La première partie d'extrémité 41 du support de l'électronique 40 possède une forme sensiblement annulaire et chacune des barrettes de liaison 42 possède une première section droite 421 orientée axialement et une deuxième section courbe 422 reliant ladite première section droite 421 à un bord intérieur de ladite première partie d'extrémité 41. Le circuit électronique 44 se présente sous la forme d'une bague de forme annulaire qui est logée dans une cavité périphérique 431 formée dans la deuxième partie d'extrémité 43 du support de l'électronique 40. Comme représenté sur les figures 6 et 7, les bandes de connexion électrique 46 sont partiellement noyées, d'une part, dans la première partie d'extrémité 41 du support de l'électronique 40 au niveau de premiers segments 461 de forme partiellement annulaire et, d'autre part, dans les barrettes de liaison 42 et la deuxième partie d'extrémité 43 du support de l'électronique 40 au niveau de deuxièmes segments 462 dont la forme est similaire à celle des barrettes de liaison 42. Les premiers segments 461 sont par ailleurs prolongés par des troisièmes segments 463 dépassant radialement de la première partie d'extrémité 41 et sur lesquels les fils conducteurs 47 peuvent être reliés.

## Revendications

1. Rotor (10) pour moteur électrique (30) comprenant :
- un arbre de rotor (12) monté rotatif autour d'un axe (X);
- un paquet de tôles (14) monté coaxialement sur l'arbre de rotor (12), ledit paquet de tôles (14) comprenant une pluralité de cavités internes;
- une pluralité d'aimants permanents (16) logés à l'intérieur des cavités internes du paquet de tôles (14);
- au moins un flasque (17, 19) monté axialement sur l'arbre de rotor (12),
- au moins un capteur (22) fixé ou intégré audit au moins un flasque (17, 19),
- un circuit électronique (44) relié électriquement audit au moins un capteur (22),
le circuit électronique (44) étant solidaire d'un support de l'électronique (40) fixé sur une face externe dudit au moins un flasque (17, 19), ledit support de l'électronique (40) étant configuré pour loger au moins partiellement une extrémité (122) de l'arbre de rotor (12) le support de l'électronique (40) comprenant une première partie d'extrémité (41) jouxtant ledit au moins un flasque (17, 19) et une deuxième partie d'extrémité (43) incorporant le circuit électronique (44), lesdites première et deuxième parties d'extrémité (41, 43) étant reliées par des barrettes de liaison (42) s'étendant parallèlement à l'axe (X) de l'arbre de rotor (12).

2. Rotor (10) selon la revendication 1, **caractérisé en ce que** le circuit électronique (44) se présente sous la forme d'une bague de forme annulaire.

3. Rotor (10) selon la revendication 1 ou 2, **caractérisé en ce que** le circuit électronique (44) est relié audit au moins un capteur (22) au moyen de bandes de connexion électrique (46).

4. Rotor (10) selon la revendication 3, **caractérisé en ce que** le circuit électronique (44) est solidaire du support de l'électronique (40) et les bandes de connexion électrique (46) sont solidaires du support de l'électronique (40).

5. Rotor (10) selon l'une des revendications précédentes, **caractérisé en ce que** la deuxième partie d'extrémité (43) est munie d'une ouverture centrale (45) de forme cylindrique, ladite ouverture centrale (45) possédant une forme complémentaire à une portion d'extrémité (123) de l'arbre de rotor (12).

6. Rotor (10) selon l'une des revendications précédentes, **caractérisé en ce que** la première partie d'extrémité (41) du support de l'électronique (40) possède une forme sensiblement annulaire et chacune des barrettes de liaison (42) possède une première section droite (421) orientée axialement et une deuxième section courbe (422) reliant ladite première section droite (421) à un bord intérieur de ladite première partie d'extrémité (41).

7. Rotor (10) selon l'une des revendications précédentes, **caractérisé en ce que** le circuit électronique (44) est configuré pour émettre des signaux au moyen d'une technologie de communication sans contact.

8. Rotor (10) selon la revendication 7, **caractérisé en ce que** la technologie de communication sans contact est choisie parmi l'induction et la NFC.

9. Rotor (10) selon l'une des revendications précédentes, **caractérisé en ce que** ledit au moins un capteur (22) est configuré pour mesurer une grandeur physique choisie parmi la température, l'humidité, la position et la vibration.

10. Rotor (10) selon l'une des revendications précédentes, **caractérisé en ce que** ledit au moins un capteur (22) est solidaire d'une tige (18) s'étendant axialement depuis une face interne dudit au moins un flasque (17, 19), ladite tige (18) étant logée à l'intérieur d'un orifice (20) ménagé axialement dans le paquet de tôles (14).

11. Moteur électrique (30) comprenant un rotor (10) selon l'une des revendications précédentes et un stator (36) entourant le rotor (10).

12. Moteur électrique (30) selon la revendication 11, **caractérisé en ce qu'**il comprend un carter constitué d'un palier avant (32) et d'un palier arrière (34) connectés l'un à l'autre, par exemple au moyen de vis (31), au moins l'un des paliers avant et arrière (32, 34) logeant un capteur électronique (54) destiné à recevoir des signaux émis par le circuit électronique (44) du rotor (10).

13. Moteur électrique (30) selon la revendication 12, **caractérisé en ce que** le capteur électronique (54) est solidaire d'un support de capteur (50) fixé sur une face externe d'un des paliers avant et arrière (32, 34) de manière à être aligné avec l'arbre du rotor (12), ledit support de capteur (50) possédant une extrémité (53) entourant le support de l'électronique (40), le capteur électronique (54) étant disposé sur un bord interne de ladite extrémité (53) de manière à faire face radialement au circuit électronique (44).

14. Moteur électrique (30) selon la revendication 12 ou 13, **caractérisé en ce que** le capteur électronique (54) est relié par des connexions électroniques (55) à une unité de commande du moteur électrique.

## Patentansprüche

1. Rotor (10) für Elektromotor (30), umfassend:
- eine Rotorwelle (12), die um eine Achse (X) drehbar montiert ist;
- ein Blechpaket (14), das koaxial auf der Rotorwelle (12) montiert ist, wobei das Blechpaket (14) eine Vielzahl von inneren Hohlräumen umfasst;
- eine Vielzahl von Permanentmagneten (16), die im Inneren der inneren Hohlräume des Blechpakets (14) untergebracht sind;
- mindestens einen Flansch (17, 19), der axial auf der Rotorwelle (12) montiert ist,
- mindestens einen Sensor (22), der an mindestens einem Flansch (17, 19) befestigt oder in diesen integriert ist,
- eine elektronische Schaltung (44), die elektrisch mit dem mindestens einen Sensor (22) verbunden ist,
wobei die elektronische Schaltung (44) fest mit einem Elektronikträger (40) verbunden ist, der an einer Außenseite des mindestens einen Flansches (17, 19) befestigt ist, wobei der Elektronikträger (40) so eingerichtet ist, dass er mindestens teilweise ein Ende (122) der Rotorwelle (12) aufnimmt, wobei der Elektronikträger (40) einen ersten Endabschnitt (41) umfasst, der an den mindestens einen Flansch (17, 19) angrenzt, und einen zweiten Endabschnitt (43), der die elektronische Schaltung (44) einschließt, wobei der erste und der zweite Endabschnitt (41, 43) durch Verbindungsstege (42) miteinander verbunden sind, die sich parallel zur Achse (X) der Rotorwelle (12) erstrecken.

2. Rotor (10) nach Anspruch 1, **dadurch gekennzeichnet, dass** die elektronische Schaltung (44) in Form eines ringförmigen Rings vorliegt.

3. Rotor (10) nach Anspruch 1 oder 2, **dadurch gekennzeichnet, dass** die elektronische Schaltung (44) über elektrische Verbindungsstreifen (46) mit dem mindestens einen Sensor (22) verbunden ist.

4. Rotor (10) nach Anspruch 3, **dadurch gekennzeichnet, dass** die elektronische Schaltung (44) fest mit dem Elektronikträger (40) verbunden ist und die elektrischen Verbindungsstreifen (46) fest mit dem Elektronikträger (40) verbunden sind.

5. Rotor (10) nach einem der vorhergehenden Ansprüche, **dadurch gekennzeichnet, dass** der zweite Endabschnitt (43) mit einer zentralen Öffnung (45) in zylindrischer Form versehen ist, wobei die zentrale Öffnung (45) eine Form aufweist, die zu einem Endabschnitt (123) der Rotorwelle (12) komplementär ist.

6. Rotor (10) nach einem der vorhergehenden Ansprüche, **dadurch gekennzeichnet, dass** der erste Endabschnitt (41) des Elektronikträgers (40) eine im Wesentlichen ringförmige Form aufweist und jeder der Verbindungsstege (42) einen ersten, axial ausgerichteten geraden Abschnitt (421) und einen zweiten gebogenen Abschnitt (422) besitzt, der den ersten geraden Abschnitt (421) mit einer Innenkante des ersten Endabschnitts (41) verbindet.

7. Rotor (10) nach einem der vorhergehenden Ansprüche, **dadurch gekennzeichnet, dass** die elektronische Schaltung (44) so eingerichtet ist, dass sie Signale mittels einer kontaktlosen Kommunikationstechnologie sendet.

8. Rotor (10) nach Anspruch 7, **dadurch gekennzeichnet, dass** die kontaktlose Kommunikationstechnologie unter Induktion und NFC ausgewählt wird.

9. Rotor (10) nach einem der vorhergehenden Ansprüche, **dadurch gekennzeichnet, dass** der mindestens eine Sensor (22) so eingerichtet ist, dass er eine physikalische Größe misst, die aus Temperatur, Feuchtigkeit, Position und Schwingung ausgewählt wird.

10. Rotor (10) nach einem der vorhergehenden Ansprüche, **dadurch gekennzeichnet, dass** der mindestens eine Sensor (22) fest mit einem sich axial von einer Innenseite des mindestens einen Flansches (17, 19) erstreckenden Stab (18) verbunden ist, wobei der Stab (18) innerhalb einer axial im Blechpaket (14) vorgesehenen Öffnung (20) untergebracht ist.

11. Elektromotor (30), der einen Rotor (10) nach einem der vorhergehenden Ansprüche und einen den Rotor (10) umgebenden Stator (36) umfasst.

12. Elektromotor (30) nach Anspruch 11, **dadurch gekennzeichnet, dass** er ein Gehäuse umfasst, das aus einem vorderen Lager (32) und einem hinteren Lager (34) besteht, die beispielsweise mittels Schrauben (31) miteinander verbunden sind, wobei mindestens eines des vorderen und des hinteren Lagers (32, 34) einen elektronischen Sensor (54) aufnimmt, der dazu bestimmt ist, von der elektronischen Schaltung (44) des Rotors (10) gesendete Signale zu empfangen.

13. Elektromotor (30) nach Anspruch 12, **dadurch gekennzeichnet, dass** der elektronische Sensor (54) fest mit einem Sensorhalter (50) verbunden ist, der an einer Außenseite eines des vorderen und des hinteren Lagers (32, 34) befestigt ist, so dass er mit der Rotorwelle (12) ausgerichtet werden kann, wobei der Sensorhalter (50) ein Ende (53) besitzt, das den Elektronikträger (40) umgibt, wobei der elektronische Sensor (54) an einer Innenkante des Endes (53) angeordnet ist, so dass sie radial zur elektronischen Schaltung (44) zeigt.

14. Elektromotor (30) nach Anspruch 12 oder 13, **dadurch gekennzeichnet, dass** der elektronische Sensor (54) durch elektronische Verbindungen (55) mit einer Steuereinheit des Elektromotors verbunden ist.

## Claims

1. A rotor (10) for electric motor (30) comprising:
- a rotor shaft (12) rotatably mounted about an axis (X);
- a lamination stack (14) mounted coaxially on the rotor shaft (12), said lamination stack (14) comprising a plurality of inner cavities;
- a plurality of permanent magnets (16) housed inside the inner cavities of the lamination stack (14);
- at least one flange (17, 19) mounted axially on the rotor shaft (12),
- at least one sensor (22) fixed or integrated into said at least one flange (17, 19),
- an electronic circuit (44) electrically connected to said at least one sensor (22),
the electronic circuit (44) being secured to an electronics support (40) fixed to an outer face of said at least one flange (17, 19), said electronics support (40) being configured to at least partially house one end (122) of the rotor shaft (12), the electronics support (40) comprising a first end part (41) adjoining said at least one flange (17, 19) and a second end part (43) incorporating the electronic circuit (44), said first and second end parts (41, 43) being connected by connecting bars (42) extending parallel to the axis (X) of the rotor shaft (12).

2. The rotor (10) according to claim 1, **characterized in that** the electronic circuit (44) is in the form of an annular ring.

3. The rotor (10) according to claim 1 or 2, **characterized in that** the electronic circuit (44) is connected to said at least one sensor (22) by means of electrical connection strips (46).

4. The rotor (10) according to claim 3, **characterized in that** the electronic circuit (44) is secured to the electronics support (40) and the electrical connection strips (46) are secured to the electronics support (40).

5. The rotor (10) according to any of the preceding claims, **characterized in that** the second end part (43) is provided with a central opening (45) of cylindrical shape, said central opening (45) having a shape complementary to an end part (123) of the rotor shaft (12).

6. The rotor (10) according to any of the preceding claims, **characterized in that** the first end part (41) of the electronics support (40) has a substantially annular shape and each of the connecting bars (42) has a first straight section (421) axially oriented and a second curved section (422) connecting said first straight section (421) to an inner edge of said first end part (41).

7. The rotor (10) according to any of the preceding claims, **characterized in that** the electronic circuit (44) is configured to transmit signals by means of a contactless communication technology.

8. The rotor (10) according to claim 7, **characterized in that** the contactless communication technology is selected from induction and NFC.

9. The rotor (10) according to any of the preceding claims, **characterized in that** said at least one sensor (22) is configured to measure a physical quantity selected from temperature, humidity, position and vibration.

10. The rotor (10) according to any of the preceding claims, **characterized in that** said at least one sensor (22) is secured to a rod (18) extending axially from an inner face of said at least one flange (17, 19), said rod (18) being housed inside an orifice (20) formed axially in the lamination stack (14).

11. An electric motor (30) comprising a rotor (10) according to any of the preceding claims and a stator (36) surrounding the rotor (10).

12. The electric motor (30) according to claim 11, **characterized in that** it comprises a casing consisting of a front bearing (32) and a rear bearing (34) connected to each other, for example by means of screws (31), at least one of the front and rear bearings (32, 34) housing an electronic sensor (54) intended to receive signals emitted by the electronic circuit (44) of the rotor (10).

13. The electric motor (30) according to claim 12, **characterized in that** the electronic sensor (54) is secured to a sensor support (50) fixed to an outer face of one of the front and rear bearings (32, 34) so as to be aligned with the rotor shaft (12), said sensor support (50) having one end (53) surrounding the electronics support (40), the electronic sensor (54) being arranged on an inner edge of said end (53) so as to radially face the electronic circuit (44).

14. The electric motor (30) according to claim 13 or 14, **characterized in that** the electronic sensor (54) is connected by electronic connections (55) to a control unit of the electric motor.
